# FASCICULE DE BREVET EUROPEEN

(11) **EP 1 566 617 B1**
(45) Date de publication et mention de la délivrance du brevet: **11.11.2015**
(21) Numéro de dépôt: 04356023.4
(22) Date de dépôt: 20.02.2004
(51) Int. Cl.: G01J 3/46, G01J 3/50, A61C 19/10

(54) **Equipement et procédé de mesure de teinte dentaire**
Vorrichtung und Verfahren zur Zahnfarbenbestimmung
Apparatus and method for tooth shade measurement

(43) Date de publication de la demande: 24.08.2005
(73) Titulaire: Carestream Health, Inc., Rochester, New York 14608 (US)
(72) Inventeur: Inglese, Jean-Marc, 77437 Marne la Vallee Cedex 2 (FR); Croguenec, Anne Corinne Marie, 77437 Marne la Vallee Cedex 2 (FR); Barneoud, Julien Damien Lilian, 77437 Marne la Vallee Cedex 2 (FR)
(74) Mandataire: Santarelli

(56) Documents cités:
- WO-A-00/12026
- US-A- 4 654 794
- US-A- 5 798 839
- US-A1- 2002 159 066
- US-A1- 2003 190 578
- US-B1- 6 361 489

## Description

### Domaine technique

La présente invention se rapporte à un dispositif et un procédé de mesure de teinte dentaire. On entend par teinte dentaire un ensemble de caractéristiques de la dent qui visent à traduire de manière la plus fidèle possible l'apparence de la dent. La teinte dentaire correspond ainsi à la couleur de la dent, mais peut aussi incorporer d'autres paramètres tels que le ton de la dent, sa transparence ou son état de surface etc. Ces paramètres ont en effet une influence sur l'apparence réelle de la dent.

L'invention trouve des applications dans le domaine des soins dentaires, et en particulier dans la réalisation de prothèses dentaires.

### Etat de la technique antérieure

L'évaluation de la teinte d'une dent peut être faite visuellement par un dentiste. Elle a lieu, par exemple, en comparant une dent à remplacer à un certain nombre de dents de référence d'un nuancier. Il existe plusieurs types de nuanciers. Généralement les nuanciers comportent différentes gammes de couleur, et pour chaque gamme de couleurs, un jeu de dents de référence avec des saturations de couleur différentes.

L'évaluation visuelle permet au spécialiste dentaire de prendre en compte les particularités de chaque dent, et notamment d'éventuelles inhomogénéités. En revanche, et en dépit d'éclairages standardisés, la méthode d'évaluation visuelle, reste une méthode subjective. Des erreurs peuvent en particulier résulter d'un défaut de perception des couleurs ou d'une fatigue visuelle du praticien.

Une évaluation plus objective peut être effectuée au moyen d'un colorimètre. Le colorimètre analyse la réponse spectrale d'une dent à une lumière d'excitation à large bande. Il peut être associé à des logiciels de visualisation adaptés, pour dresser une carte de teintes d'une dent. La carte de teintes est alors affichée sur un écran de contrôle. Un colorimètre de ce type est commercialement disponible, par exemple sous la marque Shade Scan.

### Exposé de l'invention

L'utilisation d'un colorimètre permet, comme indiqué précédemment, d'affranchir l'évaluation de la teinte dentaire d'une part de subjectivité liée au praticien. Toutefois, un certain nombre de difficultés peuvent persister.

Une première difficulté tient à l'éclairage de la dent. La lumière ambiante ou des réflexions parasites de la lumière d'analyse sont autant de causes possibles d'un éclairage non contrôlé, et donc d'une erreur de mesure de la teinte.

Une autre difficulté est notamment liée à d'éventuelles brillances, ou inhomogénéités de la dent qui risquent d'altérer l'évaluation de sa teinte. On peut aussi noter que la lumière diffusée par le fond de la cavité buccale est susceptible de constituer un éclairage arrière pour certaines dents et de modifier la mesure de leur teinte.

Encore une autre difficulté consiste à traduire la mesure des teintes fournies par le colorimètre en des données susceptibles d'être interprétées sans ambiguïté par un prothésiste. En effet, le prothésiste ne dispose pas nécessairement d'un équipement calibré, et ajusté au colorimètre, et ne connaît pas les conditions et les défauts de l'éclairage de la dent.

Enfin, une difficulté tient à l'encombrement de certains colorimètres qui limitent leur usage aux seules dents de la partie avant de la bouche.

Il est connu du document US 6,361,489 un instrument portable de diagnostic et d'examen qui comprend , dans le nez de l'instrument, une source de lumière comportant plusieurs diodes d'émission de lumière, plusieurs sites d'émission de lumière connectés optiquement aux diodes par un couplage à fibres optiques, ainsi qu'un capteur d'image qui reçoit la lumière réfléchie par l'objet examiné.

Cette lumière est ensuite traitée et convertie en une image vidéo en vue de son affichage.

On connaît par ailleurs du document WO 00/12026 un appareil et une méthode de mesure de la couleur d'une dent d'un patient.

L'appareil comprend une source de lumière de largeur spectrale donnée qui émet, à partir d'une sonde, une lumière vers une dent et la lumière réfléchie est reçue par la sonde et acheminée jusqu'à un spectroscope.

Le spectroscope décompose la lumière reçue en plusieurs faisceaux de longueurs d'onde différentes qui sont envoyés, par un jeu de miroirs, vers un capteur CCD.

Le capteur transforme ces faisceaux lumineux en signaux électriques qui sont ensuite traités informatiquement. Le document US5759030 divulgue un outil de mesure de teinte dentaire comprenant un capteur et une tête d'illumination.

Afin d'obvier les difficultés mentionnées ci-dessus, l'invention concerne plus précisément le dispositif de mesure de teinte dentaire décrit dans la revendication 1.

L'espace des teintes, est un espace à plusieurs dimensions, comparable à un espace des couleurs. Il peut à ce titre être sous-tendu par plusieurs vecteurs de couleur, correspondant à différentes dimensions de l'espace, mais aussi par des vecteurs représentatifs d'autres paramètres tels que la transparence, ou l'état de surface de la partie de dent. Ces paramètres peuvent ainsi constituer des dimensions supplémentaires de l'espace des teintes. Le choix des vecteurs qui sous-tendent l'espace des teintes ou un hyperespace de l'espace des teintes, peut être dicté par les gammes spectrales des moyens d'illumination. Il peut aussi être dicté par un choix de convenance, adapté aux habitudes d'un prothésiste dentaire destinataire des mesures de teinte. Les habitudes ou les contraintes techniques d'un prothésiste dentaire peuvent encore être respectées en choisissant les points de référence de l'espace des teintes en fonction de différents nuanciers possibles.

Les éventuelles lumières parasites, réflexions, ou autres artéfacts lumineux, susceptibles d'altérer la mesure de la teinte, se manifestent différemment dans les différentes gammes spectrales de l'illumination. Ceci permet de mieux contrôler les effets parasites. A titre d'exemple, l'une des dimensions de l'espace des teintes peut être mise à profit pour la correction d'effets parasites.

Les moyens d'illumination peuvent comporter des sources de lumière visible, mais aussi des sources de lumière ultraviolette et/ou infrarouge. Les sources de lumière, et notamment les sources de lumière visible sont de préférence sensiblement monochromes. Leur extension spectrale est, par exemple, choisie inférieure à 35 nm.

Par ailleurs, les sources de lumière sont de préférence des sources froides. L'utilisation de sources froides permet de concevoir un système d'éclairage plus compact et plus ergonomique, en évitant des problèmes de dissipation thermique. Les sources sont par exemple des diodes électroluminescentes (LED) ou des diodes laser.

La compacité et l'ergonomie des moyens d'illumination peuvent encore être améliorées par l'usage de fibres optiques couplées aux sources de lumière. Les fibres, qui relient les sources de lumière à des sites d'émission de lumière, permettent de positionner plus librement les sources dans un outil de mesure et donc d'en optimiser la forme et les dimensions.

Un autre avantage lié à l'illumination successive de la partie de dent avec des lumières de gammes spectrales différentes, est la possibilité d'utiliser un unique capteur monochrome. L'usage d'un capteur monochrome, à la place d'une pluralité de capteurs pourvus de filtres colorés, permet d'en réduire l'encombrement. Le capteur peut être un capteur ponctuel, tel qu'une photodiode, ou un capteur d'image comprenant une pluralité de pixels.

Le dispositif de l'invention peut être conçu pour mesurer la teinte sur une dent entière, éventuellement un ensemble de dents, mais aussi sur une partie de dent seulement. Lorsque le dispositif est utilisé pour une partie de dent seulement, le dentiste peut tenir compte d'éventuelles inhomogénéités de la dent, en pointant la mesure en différents endroits de la dent. Le dentiste peut effectuer une mesure, par exemple, sur cinq sites de la dent, qui sont, en partant de la gencive, le site cervical, le site centro-cervical, le site central, le site centro-incisif et le site incisif. Les teintes de ces sites dentaires peuvent aussi être établies en effectuant une mesure globale de la dent, avec un dispositif pourvu d'un capteur matriciel. Dans ce cas, les données de certains pixels de la matrice sont extraites, pour établir les teintes des parties de dent correspondantes.

Les moyens de conversion des signaux en coordonnées d'un point de l'espace des teintes peuvent comporter un circuit de mise en forme du signal, un convertisseur analogique numérique et une unité de calcul. Une unité de calcul commune peut être utilisée en partie pour l'établissement des coordonnées et en partie pour la recherche de la teinte correspondant à un point de référence. Il s'agit, par exemple, d'une unité de calcul sous la forme d'un circuit dédié, ou d'un ordinateur programmé.

Dans une réalisation particulière du dispositif, celui-ci comprend deux parties distinctes qui sont d'une part, un outil de mesure, et d'autre part un terminal d'exploitation des mesures. Le terminal, qui peut héberger l'unité de calcul mentionnée précédemment, peut aussi être pourvu d'un écran de visualisation, d'une interface d'utilisateur et/ou une interface de communication. En hébergeant dans le terminal d'exploitation une partie des moyens du dispositif, l'outil de mesure peut être rendu particulièrement léger et ergonomique. Il est alors relié au terminal d'exploitation des mesures par l'intermédiaire d'une liaison optique, électrique ou, de préférence, hertzienne. La liaison est, par exemple, une liaison de type Bluetooth.

L'invention concerne également un outil de mesure, pour le dispositif décrit ci dessus. Il s'agit d'un outil à main que le dentiste peut approcher d'une dent ou d'une partie de dent afin d'effectuer une mesure de teinte.

L'outil comprend, pour l'essentiel, le capteur et les moyens d'illumination de la dent. Des moyens de mise en forme, ou de conversion des signaux de mesure, de même qu'une interface de transmission de données peuvent également être logés dans l'outil de mesure à main.

L'outil se présente de préférence en deux parties. Une première partie, désignée par "poignée" sert de logement à des circuits électriques formant les moyens évoqués ci-dessus. Elle peut aussi comporter les sources de lumière et une alimentation électrique autonome. Une deuxième partie est désignée par "tête d'illumination". Elle comprend des sites d'émission de lumière et éventuellement le capteur de lumière. La tête est la partie de l'outil de mesure approchée de la dent pour effectuer les mesures de teinte. Elle est de préférence montée de manière amovible sur la poignée, de manière à pouvoir en être détachée et être stérilisée séparément.

Les sites d'émission de lumière sont ménagés sur la tête, de préférence autour du capteur. Ils peuvent être constitués directement par les sources de lumière, déjà évoquées, ou être reliées à ces sources par des fibres optiques. Dans ce dernier cas, les sites d'émission de lumière sont constitués essentiellement par les extrémités libres des fibres optiques.

Tous les sites d'émission de lumière peuvent être couplés communément à un ensemble de sources de lumière, de manière à émettre simultanément une lumière de la même gamme spectrale, lors de l'activation d'au moins une source de lumière.

Selon une variante, la tête de l'outil peut présenter une pluralité de sous-ensembles de sites d'émission de lumière, chaque sous ensemble de sites d'émission de lumière étant couplé respectivement à une source de lumière prise parmi une pluralité de sources de lumière de gammes spectrales différentes. Ainsi, les sites d'émission de lumière de chaque sous-ensemble émettent simultanément une lumière de la même gamme spectrale, mais uniquement lorsque la source de lumière correspondante est alimentée. Les sites d'émission de lumière de chaque sous-ensemble sont de préférence répartis de manière sensiblement régulière autour du capteur. Dans une version simplifiée de l'outil, un site d'émission de lumière peut être réservé à chaque couleur ou chaque gamme spectrale d'émission. Si un nombre N de sites est prévu pour une gamme spectrale donnée, ces sites sont, par exemple, disposés en couronne avec un écartement angulaire de 2π/N rad.

De manière très simple, les coordonnées du point de mesure peuvent être établies en convertissant le signal de mesure en un signal numérique et en retenant une coordonnée proportionnelle à la valeur du signal numérique, pour chaque gamme spectrale de la lumière d'illumination. Les coordonnées peuvent être corrigées les unes en fonction des autres, ou peuvent être soumises à des combinaisons linéaires pour définir de nouveaux points dans l'espace des teintes. Le signal de mesure peut également subir une correction, par exemple, une atténuation ou une amplification pour tenir compte d'éventuelles variations de l'intensité des sources de lumière d'illumination.

La transparence d'une dent ou d'une partie de dent peut être déterminée en mesurant la lumière infrarouge renvoyée par la dent en réponse à une illumination en lumière infrarouge. Une transparence élevée se traduit alors par une lumière renvoyée de faible intensité. La transparence peut être utilisée comme une coordonnée du point de mesure selon une dimension de l'espace des teintes dédiée à ce paramètre. Elle peut aussi être utilisée pour la correction d'au moins une autre coordonnée du point de mesure selon une autre dimension. En particulier, la mesure effectuée en lumière infrarouge peut être utilisée pour la correction d'une coordonnée du point de mesure dans une dimension correspondant aux teintes rouges.

Une telle correction permet de prendre en compte la couleur essentiellement rouge du fond de la cavité buccale, qui peut modifier la perception des parties les plus transparentes des dents.

Un autre paramètre de la dent susceptible d'être pris en compte comme une coordonnée de l'espace des teintes, ou comme un paramètre de correction, est l'état de surface de la dent. Le paramètre est encore désigné par paramètre de rugosité. Il est déterminé en illuminant la dent avec une lumière ultraviolette. Une dent lisse a tendance a renvoyer une quantité de lumière ultraviolette supérieure à celle renvoyée par une dent rugueuse. Le paramètre de rugosité, peut servir à établir une coordonnée du point de mesure selon une dimension de l'espace des teintes dédiée à ce paramètre. Toutefois il est préférentiellement utilisé pour déterminer un traitement éventuel de données en provenance de différentes parties d'une dent. Un exemple en est donné ci-après.

Avec un capteur de type matriciel, présentant une pluralité de pixels il est possible de dresser une carte d'une dent faisant apparaître la teinte de différentes parties de la dent. Une partie affectée d'un paramètre de rugosité faible, est susceptible d'être le lieu d'une réflexion parasite. La teinte de cette partie subit donc une correction, par exemple en effectuent une moyenne avec les teintes voisines, ou en modifiant la saturation. Une partie affectée d'un paramètre de rugosité élevé, ne subira en revanche pas, ou que très peu de correction, en fonction des parties voisines.

Une information supplémentaire susceptible d'être prise en compte pour l'évaluation de la teinte est l'influence directe de la lumière ambiante sur les mesures. A cet effet, on peut effectuer au moins deux mesures : une première mesure de la lumière en provenance de la dent est effectuée en l'absence de lumière provoquée, c'est à dire lorsque les moyens d'illumination ne sont pas alimentés, et au moins une deuxième mesure est effectuée en présence de la lumière provoquée par les moyens d'illumination. Dans ce cas les coordonnées du point de mesure sont établies en fonction d'un écart entre ces deux mesures. On peut, par exemple retrancher la mesure effectuée en l'absence d'illumination provoquée à celles effectuées ultérieurement en présence d'une illumination provoquée.

L'influence de la lumière ambiante peut aussi être limitée en disposant à l'extrémité de la tête d'illumination des caches appropriés. Cet aspect est encore évoqué dans la suite de la description.

Les sources de lumière utilisés dans les moyens d'illumination sont susceptibles de produire une lumière d'intensité variable dans le temps. Les variations peuvent provenir des sources elles-mêmes, mais aussi de leur alimentation électrique.

Les variations peuvent être compensées en mesurant l'intensité de la lumière d'illumination directe fournie dans chaque gamme spectrale. Lors de cette mesure on dirige directement vers le capteur tout ou partie de la lumière d'illumination. Ceci peut avoir lieu avec un miroir. Lorsque les moyens d'illumination comportent des fibres optiques, une ou plusieurs des fibres peuvent aussi être connectées directement au capteur, pour fournir un signal de mesure de l'illumination directe.

La mesure de l'illumination directe peut être ensuite utilisée pour modifier l'alimentation électrique des sources de lumière. L'alimentation est modifiée dans un sens qui fait entrer le signal de mesure de la lumière d'illumination directe dans une plage de consigne. L'alimentation des sources de lumière peut aussi être maintenue inchangée. Dans ce cas une correction peut avoir lieu sur les coordonnées des points de mesure établis ultérieurement. Par exemple, un affaiblissement de la lumière d'illumination de la dent dans une plage spectrale donnée peut être compensée par une augmentation des coordonnées du point de mesure dans des dimensions de l'espace des teintes correspondant à la plage spectrale.

La position des points de référence dans l'espace des teintes dépend d'une part du nuancier auquel ces points correspondent, et d'autre part du choix des vecteurs ou dimensions de couleur qui sous-tendent l'espace. Il peut s'agir de dimensions correspondant à des couleurs primaires, tels que le rouge, le vert et le bleu ou à tout autre jeu de couleurs. Le choix des nuanciers auxquels correspondent les points de référence peuvent éventuellement être modifiables selon les souhaits de l'utilisateur. Le choix des dimensions de l'espace des teintes conditionne les coordonnées des points de mesure et des points de références dans cet espace. Il peut être fixé par un logiciel d'exploitation des mesures.

La recherche d'un point de référence le plus proche d'un point de mesure peut avoir lieu par calcul algébrique des distances entre le point de mesure et différents points de référence. Le calcul peut avoir lieu soit dans l'espace des teintes selon toutes ses dimensions, soit dans une projection de l'espace des teintes dans un hyper-espace de dimension inférieure. Elle a lieu, par exemple, et de manière simplifiée, dans un espace à deux dimensions.

Un logiciel de traitement des données peut être conçu pour regrouper les points de référence de l'espace des teintes en familles de teintes. La recherche de la teinte correspondant à un point de mesure peut alors être exécuté de manière itérative . Par exemple, le point de mesure peut d'abord être positionné dans une famille de teintes et la recherche de teinte peut ensuite être affinée dans cette famille. Ceci revient à rechercher d'abord la famille de teintes la plus proche du point de mesure puis de rechercher dans cette famille le point de référence le plus proche du point de mesure.

D'autres caractéristiques et avantages de l'invention ressortiront de la description qui va suivre, en référence aux figures des dessins annexés. La description et donnée à titre purement illustratif et non limitatif.

### Brève description des figures

La figure 1 est une représentation schématique simplifiée d'un dispositif conforme à l'invention comprenant un outil de mesure à main et un terminal d'exploitation des mesures.
Les figures 2 et 3 sont des représentations schématiques simplifiées et partielles de têtes d'illumination susceptibles d'équiper un outil de mesure conforme à l'invention.
La figure 4 est un organigramme illustrant un procédé de mesure de teinte dentaire.
La figure 5 est une représentation à trois axes d'un espace des teintes, et illustre la recherche d'une teinte dentaire.

### Description détaillée de modes de mise en oeuvre de l'invention

Dans la description qui suit, des parties identiques, similaires ou équivalentes des différentes figures sont repérées avec les même signes de référence.

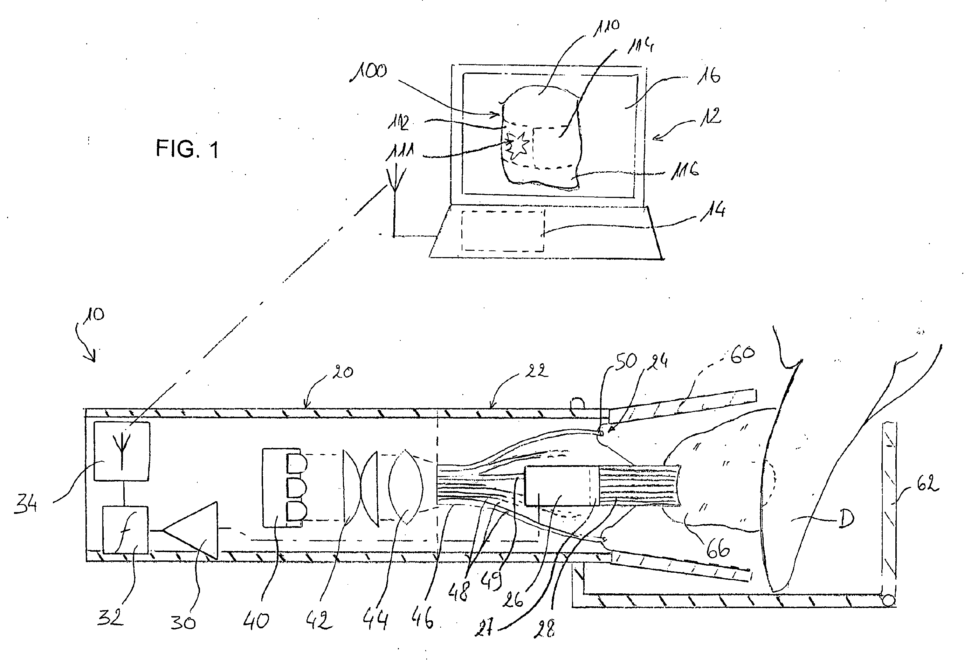

La figure 1 illustre un dispositif conforme à l'invention. Il comprend un outil de mesure à main 10 et un terminal d'exploitation des mesures 12. Ces deux parties du dispositif sont représentés en échelle libre pour des raisons de clarté de la figure. Le terminal d'exploitation 12 comprend pour l'essentiel une unité de calcul 14, susceptible de traiter des données de mesure en provenance de l'outil à main 10, et un afficheur 16. Dans l'exemple de la figure, l'afficheur est un écran d'ordinateur. L'écran peut être remplacé par un afficheur plus sommaire capable d'afficher le résultat de la mesure d'une teinte. Dans une réalisation particulière du dispositif, le terminal d'exploitation peut aussi être supprimé. L'unité de calcul et l'afficheur sont alors intégrés dans l'outil à main 10.

L'outil à main comprend une poignée 20 et une tête d'illumination 22 solidaire de la poignée. La tête 22 est conçue pour pouvoir être retirée de la poignée, afin notamment de subir une stérilisation après utilisation.

La tête d'illumination, de forme sensiblement cylindrique présente une couronne de sites d'émission de lumière 24. Les sites d'émission de lumière entourent un capteur de lumière 26. Celui-ci est pourvu d'un tronçon de fibres optiques 28 qui font saillie à l'extérieur de la tête 22. Les sites d'émission de lumière permettent de diriger vers une partie de dent D une lumière d'illumination. Le tronçon de fibres optiques du capteur permet en revanche de recueillir la lumière renvoyée par la dent D et la diriger vers le capteur. Son rôle est aussi un rôle de protection du capteur. Lorsque le tronçon de fibres optiques 28 est plus long, le capteur peut aussi être logé dans la poignée 20 de l'outil à main.

Dans l'exemple illustré, le capteur 26 est un capteur monochrome pourvu d'une matrice de pixels de manière à fournir un signal permettant de restituer une image de la dent ou de la partie de dent considérée. Le capteur est de préférence un capteur à couplage de charge (CCD) ou un capteur à effet de champ (MOS) ayant un large spectre de capture. Lorsque le spectre de capture ne couvre pas l'ensemble des gammes spectrales de l'illumination de la dent, un second capteur avec un spectre décalé peut éventuellement être prévu. Dans l'exemple illustré, une autre solution est toutefois retenue. Le capteur 26 est pourvu d'un scintillateur 27 capable de convertir une lumière ultraviolette en provenance de la dent en une lumière visible à laquelle le capteur est sensible.

Le capteur est relié à un circuit 30 de mise en forme du signal de mesure, et, par l'intermédiaire de ce circuit, à un convertisseur analogique numérique 32. Le convertisseur délivre, en réponse au signal de mesure des données numériques. Le convertisseur transmet les données une interface d'échange 34 avec le terminal d'exploitation des données. Il s'agit en l'occurrence d'une interface de transmission hertzienne de zone, de type Bluetooth, par exemple. Elle est symbolisée par une petite antenne.

La référence 40 désigne un jeu de diodes électroluminescentes servant de sources de lumière. Le jeu de diodes est capables de produire une lumière ultraviolette centrée sur 405 nm, une lumière bleue, centrée sur 430 nm, une lumière jaune, centrée sur 470 nm, une lumière verte, centrée sur 525 nm, une lumière orangée centrée sur 590 nm, une lumière rouge centrée sur 660 nm et une lumière infrarouge centrée sur 880 nm. Seules trois diodes sont représentées pour des raisons de clarté. Dans un même souci, les moyens d'alimentation électrique des diodes, du capteur et des circuits électriques sont volontairement omis sur la figure.

Le jeu de diodes est disposé devant un groupe optique formé d'un condenseur 42 et d'une lentille convergente 44. Le groupe optique reçoit de la lumière d'une, ou éventuellement de plusieurs diodes de même couleur du jeu de diodes 40, et fait converger la lumière, de façon sensiblement uniforme, sur un guide optique 46 formé d'une pluralité de fibres optiques 48. Chaque fibre optique dirige la lumière d'illumination produite par la diode vers l'un des sites d'émission de lumière déjà évoqué. Chaque site comprend l'extrémité libre 50 d'une fibre. Dans ce mode de réalisation, la lumière produite par l'une des sources de lumière, en l'occurrence l'une des diodes, est acheminée à l'ensemble des sites d'émission de lumière. L'ensemble des sites d'émission diffusent ainsi une lumière de la même couleur, lorsque l'une des sources est alimentée.

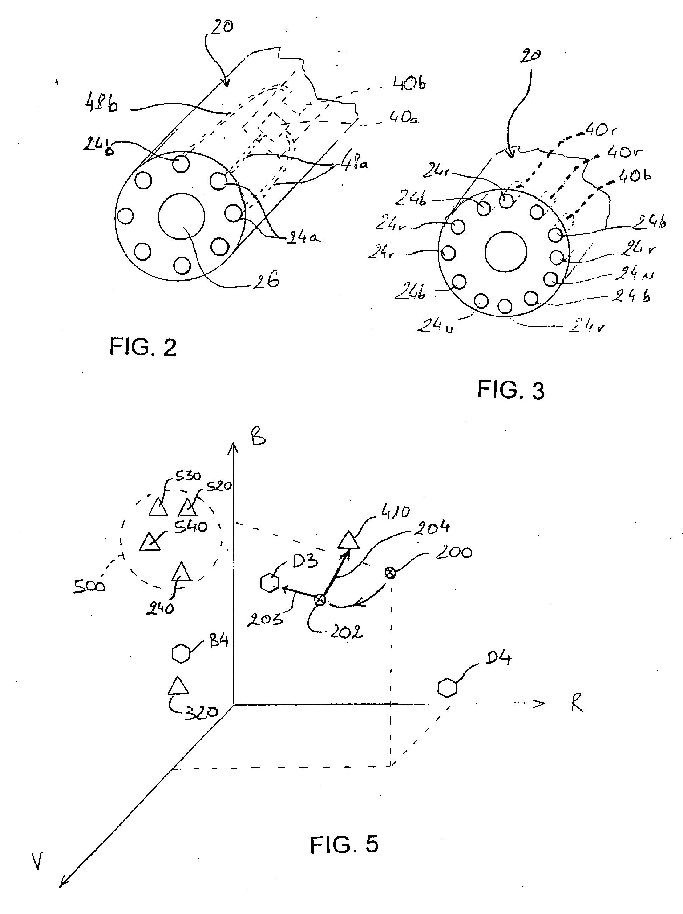

Une autre possibilité de mise en oeuvre de l'invention, est illustrée par la figure 2 qui ne montre que l'extrémité de la tête d'illumination d'un outil de mesure. Chaque source de lumière 40a, 40b est reliée individuellement à un ou plusieurs sites d'émission de lumière 24a, 24b. Les sources de lumière 40a, 40b comportent des diodes électroluminescentes montées en surface (SMD) ou en puces (bare die). Chacune de leur face peut être assimilée à une source de lumière individuelle. Lorsqu'une première source 40a est alimentée, deux sites d'émission de lumière 24a reçoivent la lumière de la source. La lumière chemine par l'intermédiaire de fibres optiques 48a, couplées à deux faces latérales différentes de la source 40a.

Le site d'émission de lumière 24b, reliée à une autre source de lumière 40b par une fibre 48b, n'émet alors aucune lumière. Le site 24b n'émet de la lumière que si une deuxième source 40b est alimentée. Ainsi les références 24a et 24b désignent des sous-ensembles de sites d'émission de lumière qui émettent de la lumière de façon épisodique, chaque fois que la source de lumière qui leur correspond est alimentée.

On observe par ailleurs sur la figure 2 que le capteur 26 affleure à la surface de la tête, au centre d'une couronne de sites d'émission de lumière. Les sites d'émission de lumière peuvent également être disposés en plusieurs couronnes concentriques autour du capteur.

La figure 3 montre encore une autre possibilité de réalisation de la tête d'illumination 20. Une couronne de sites d'illumination 24r, 24v, 24b est formée directement par des diodes électroluminescentes 40r, 40v, 40b qui affleurent respectivement à la surface de l'extrémité libre de la tête. Ici aucune fibre optique n'est prévue. On observe également que des sites d'émission d'une lumière de la même couleur, 24r, 24v, 24b sont réparties autour de la couronne avec un écartement angulaire sensiblement régulier. Les indices r,v,b sont utilisés ici pour désigner l'émission de lumière rouge, verte et bleue. Ceci n'exclut pas l'usage de sources d'autres couleurs ni celle d'une illumination en lumière infrarouge ou ultraviolette.

Par retour à la figure 1, on note également qu'une fibre 49, optiquement couplée aux sources de lumière est reliée directement au capteur 26. Elle est par exemple couplée à une photodiode du capteur ou à quelques pixels du capteur. Le capteur peut ainsi délivrer non seulement un signal de mesure de la lumière en provenance de la dent, mais aussi un signal représentatif de la lumière d'illumination incidente, en provenance des sources de lumière. Ce second signal peut être utilisé, comme évoqué précédemment, pour piloter l'alimentation électrique des sources de lumière, pour piloter le traitement du signal de mesure, ou pour corriger les coordonnées du point de mesure.

Un certain nombre d'accessoires, destinés à réduire l'influence de lumières parasites lors des mesures, peuvent équiper l'outil de mesure à main.

Un premier accessoire 60 est un cache opaque, de forme essentiellement tronconique. Le cache 60 vient coiffer l'extrémité de la tête d'illumination, de manière à entourer à la fois les sites d'émission de lumière 24, le capteur 26, et éventuellement le tronçon de fibres optiques 28 qui est associé au capteur. Le cache tend à éliminer l'arrivée de lumière ambiante au voisinage de la partie de dent qui fait l'objet d'une mesure. Ceci permet d'éviter non seulement une illumination parasite de la dent, mais aussi la capture directe de lumière parasite.

Un autre cache opaque 62, de couleur noire, mat et uniforme est maintenu à une distance suffisante de l'extrémité de la tête d'illumination, et du premier cache 60, pour pouvoir insérer une dent à mesurer entre ces parties. Le second cache se trouve ainsi situé sur une face arrière de la dent, opposée à la face dont on souhaite mesurer la teinte. Le cache évite qu'une lumière renvoyée par la cavité buccale vers la face arrière de la dent modifie de manière non contrôlée la teinte de la dent, notamment dans ses parties les plus transparentes.

Comme évoqué précédemment, une partie de dent lisse ou une dent lisse est plus susceptible de créer des reflets parasites qu'une dent rugueuse. Ceci peut être corrigé, au moins en partie, en utilisant le paramètre de rugosité. Sur l'afficheur 114, une carte de teintes 100 de la dent D est représentée. Elle est dressée à partir des mesures de teinte effectuées dans plusieurs parties de la dent 110, 112, 114, 116. La référence 111 désigne une brillance dans une partie de dent 112. Si la partie de dent 112 affectée de la brillance 111 présente un paramètre de rugosité très faible, suite à une mesure effectuée sous illumination ultraviolette, la brillance 111 est interprétée comme une anomalie. La teinte de la partie de dent 112 concernée peut être remplacée ou compensée par une moyenne de teintes calculée en fonction de la teinte des autres parties de dents voisines 110, 114, 116. Si, en revanche le paramètre de rugosité est élevé, c'est à dire si la partie de la dent 112 est texturée, une correction moindre ou nulle de la teinte et envisagée. Les corrections de la teinte de la partie de dent affectée par une brillance peuvent aussi être effectuées sur les coordonnées du point de mesure dans l'espace des teintes, qui correspond à la partie de dent. Sur la figure, la brillance 111 est indiquée à simple titre d'illustration. Les corrections de teinte, et en particulier de la luminosité ou de la saturation, peuvent avoir lieu avant affichage, de sorte que la brillance 111 n'apparaisse finalement pas.

Les brillances ou des effets lumineux parasites peuvent aussi être limitées ou éliminées en disposant entre le capteur et la dent un gel, un liquide, ou plus généralement une substance transparente 66. La substance transparente vient en contact du capteur, ou, comme le montre la figure 1, en contact du tronçon de fibres optiques 28 qui coiffe le capteur 26. La substance transparente est aussi en contact avec la dent. Elle permet d'éviter un changement d'indice optique fort entre l'émail de la dent et l'air. Ceci permet ainsi de réduire l'influence de la texture de la dent sur la réflexion de la lumière d'illumination. La substance transparente est de préférence un liquide ou un gel dont l'indice de réfraction est le plus proche possible de celui de l'émail dentaire, toutefois une simple solution sucrée peut être retenue.

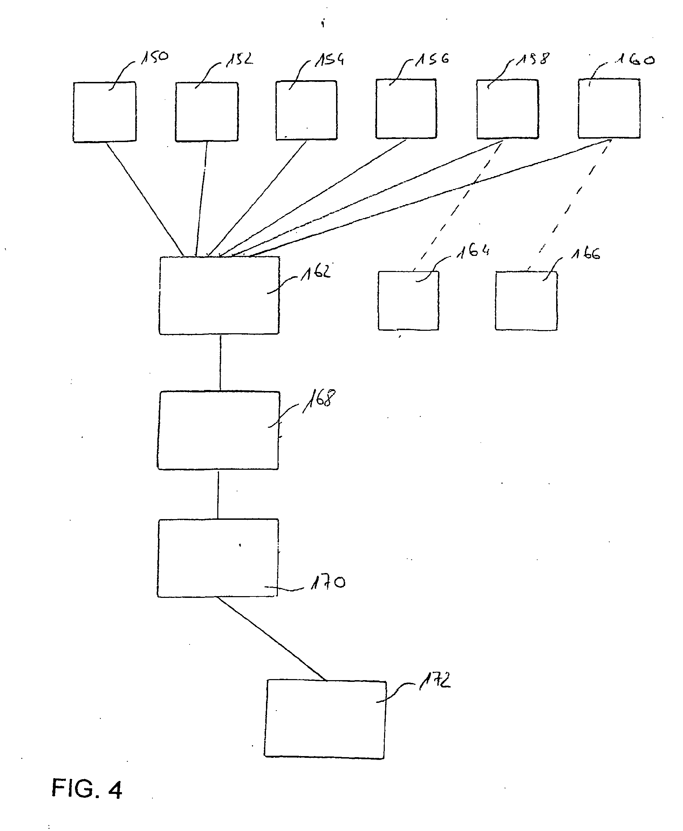

La figure 4 est un organigramme qui montre les principales étapes d'un procédé de mesures de teintes, conforme à l'invention. Une première étape comprend l'illumination de la dent avec de la lumière visible et la capture de la lumière renvoyée par la dent. Cette opération, indiquée avec les références 150, 152,154, est répétée pour plusieurs gammes de longueur d'onde d'illumination. Les références 156 et 158 désignent les mêmes opérations effectuées avec des illuminations infrarouge et ultraviolette. Enfin, la référence 160 indique une capture de lumière en provenance de la dent en l'absence d'illumination. Cette capture permet de prendre en compte l'influence de l'éclairage ambiant.

Une étape suivante, indiquée avec la référence 162 comprend la mise en forme les signaux de mesure délivrés lors des captures, et le calcul de coordonnées de points de mesure. La lumière capturée en l'absence d'illumination est soustraite à celle capturée en présence d'une illumination provoquée. Par ailleurs, et de la façon déjà évoquée, la lumière capturée sous illumination infrarouge et ultraviolette est utilisée pour calculer des paramètres de transparence 164, et de rugosité 166 de la dent. Les paramètres peuvent être éventuellement affichés. Ils peuvent aussi être mis en forme et transformés en coordonnées du point de mesure dans des dimensions correspondantes d'un espace de teintes.

Une étape suivante 168, qui sera encore décrite en relation avec la figure 5, comprend des corrections des coordonnées du point de mesure. Les corrections sont faites soit en fonction d'autres points de mesures établis pour d'autres parties de la dent, ou de dents voisines, soit en fonction des paramètres de rugosité et/ou de transparence 164, 166. Les coordonnées corrigées sont utilisées dans une étape 170 pour la recherche dans l'espace des teintes de points de références correspondant aux teintes d'un nuancier. Cette étape est également illustrée par la figure 5. Enfin, la référence 172 indique l'affichage de la teinte. L'affichage peut avoir lieu avec celui d'une image de la dent, de façon à présenter une carte des teintes de la dent.

La figure 5 illustre l'établissement de la teinte d'une dent à partir du signal de mesure converti en un point d'un espace des teintes.

La description qui suit se réfère à l'établissement de la teinte d'une dent à partir du signal de mesure produit par un capteur tel qu'une photodiode. Lorsque le capteur est un capteur matriciel avec une pluralité de pixels, une teinte, ou un point de mesure dans l'espace des teintes peut être établi pour chaque pixel, ou pour un ensemble de pixels. Des moyennes peuvent ensuite être effectuées sur des groupes de pixels, en tenant compte, par exemple, du paramètre de rugosité déjà évoqué.

De manière très simplifiée la figure 5 montre un espace des teintes à trois dimensions R,V, B. Ces dimensions correspondent, par exemple, aux couleurs de trois sources lumineuses rouge, vert et bleu, des moyens d'illumination. Il convient de préciser que les dimensions ne coïncident pas nécessairement avec les couleurs des sources de lumière. Les sources peuvent émettre des lumières qui correspondent à une combinaison des couleurs qui sous-tendent l'espace des teintes. Par ailleurs le nombre des dimensions de l'espace des teintes n'est pas limité à trois. L'espace des teintes peut en particulier inclure des dimensions correspondant aux mesures en lumière infrarouge et ultraviolette.

Le signal de mesure obtenu en réponse à une illumination dans une gamme spectrale donnée, c'est à dire avec une couleur donnée, est converti en une valeur numérique, ou code, par le convertisseur analogique-numérique. Ce code, ou une valeur proportionnelle au code, constitue alors une coordonnée du point de mesure selon la dimension qui correspond à la couleur de l'illumination. Si la lumière d'illumination est une combinaison des couleurs de plusieurs dimensions de l'espace des teintes, les coordonnées selon les dimensions concernées correspondent au code pondéré par des coefficients de proportionnalité.

De manière générale, les mesures effectuées en réponse aux différentes illuminations peuvent présenter entre elles un certain degré de corrélation. Une analyse en composantes principales permet alors de rechercher un espace des teintes dans lequel le degré de redondance des mesures est minimisé.

La référence 200 désigne un point de l'espace des teintes. Les coordonnées du point selon les dimensions de l'espace des teintes sont symbolisées par des projections en trait discontinu sur les axes des dimensions R, V, B.

La référence 202 désigne un nouveau point de l'espace des teintes dont les coordonnées sont établies en corrigeant les coordonnées du point de mesure initial 200. Les corrections prennent en compte, par exemple, la transparence de la partie de dent, l'éclairage ambiant, la lumière incidente en provenant des sources de lumière etc.

A titre d'illustration, une coordonnée de l'espace des teintes correspondant à la lumière infrarouge peut être utilisée pour corriger la composante selon la dimension R correspondant au rouge. Le nouveau point 202 de l'espace des teintes est utilisé pour rechercher la teinte de la partie de dent.

Dans l'espace des teintes figurent également des points de référence 320, 410, 540. Ceux-ci sont matérialisés par de petits triangles. Ils correspondent à des valeurs connues d'un premier nuancier. Les coordonnées de ces points peuvent être acquises par l'outil de mesure lors d'une phase d'apprentissage, ou être programmées. Un autre jeu de points de référence B4, D3, D4, matérialisé par de petits hexagones, correspond aux teintes d'un deuxième nuancier. Seul un nombre réduit de points de référence est représenté pour des raisons de clarté de la figure.

Le point de référence le plus proche du point de mesure, éventuellement corrigé, est recherché pour établir la teinte de la partie de dent considérée. Ce point est recherché pour un nuancier donné. Dans le cas de la figure, la teinte de la partie de dent correspondant au point de mesure corrigé 202 est la teinte correspondant au point de référence 410 du premier nuancier. Il s'agit, par exemple, de la teinte 410 du nuancier « Cromascop ». La teinte retenue peut aussi être celle qui correspond au point D3 du deuxième nuancier. Il s'agit, par exemple, de la teinte D3 du nuancier « Vita Lumin Classic ».

On constate que le point de mesure ne coïncide pas exactement avec les points de référence. Un vecteur de correction 203, 204, de l'espace des teintes, pointant du point de mesure vers le point de référence indique la distance et l'orientation de l'écart existant entre le point de mesure et le point de référence retenu. Des données représentatives de la longueur et de l'orientation du vecteur de correction peuvent être affichées avec la teinte, sur un écran de contrôle ou un afficheur dédié.

La recherche du point de référence le plus proche d'un point de mesure peut être effectué dans l'espace des teintes ou dans un hyper-espace de l'espace des teintes. Par exemple, l'ensemble des points peuvent être projetés dans un espace à deux dimensions seulement.

La recherche des points de référence peut avoir lieu par calcul des distances entre le point de mesure et un ensemble de points de référence mémorisés, en assimilant l'espace des teintes à un espace vectoriel, et en sélectionnant la distance algébrique la plus courte. L'espace des teintes peut aussi être considéré comme un espace décrit par des valeurs discrètes de coordonnées. Les points de référence peuvent alors être enregistrés dans une mémoire programmable, par exemple une mémoire EPROM, et les codes numériques ou coordonnées des points de mesure peuvent être utilisés pour l'adressage de la mémoire.

La recherche des teintes de référence d'un nuancier correspondant à un point de mesure peut encore être réalisée par réseau de neurones. Dans ce cas le dispositif de l'invention subit une phase d'apprentissage lors de laquelle on mesure les teintes d'un nuancier.

Comme évoqué précédemment, les points de référence de l'espace des teintes peuvent être regroupés par familles. Une telle famille 500 est représentée sur la figure 5. Elle regroupe les points de référence 240, 520, 530, 540 et peut être représentée par un point commun correspondant au barycentre de ces points.

La recherche de la teinte peut alors avoir lieu en plusieurs étapes. Dans une première étape on recherche la famille de teintes à laquelle correspond le point de mesure. Ceci a lieu en calculant les distances entre le point de mesure et les points de référence communs représentant les familles. La famille la plus proche étant retenue, la recherche de la teinte de référence la plus proche est entreprise.

## Revendications

1. Outil de mesure de teinte dentaire (10) comprenant au moins un capteur (26) et une tête d'illumination (22) pourvue d'une pluralité de sites d'émission de lumière (24) associés à des sources de lumière, **caractérisé en ce qu'**il comprend une pluralité de sous-ensembles de sites d'émission de lumière (24a, 24b), chaque sous ensemble de sites d'émission de lumière étant couplé respectivement à une source de lumière (40a, 40b) prise parmi une pluralité de sources de lumière de gammes spectrales différentes, de manière que les sites d'émission de lumière de chaque sous ensemble émettent simultanément une lumière de la même gamme spectrale, les sites d'émission de lumière de chaque sous-ensemble étant répartis de manière sensiblement régulière autour du capteur, la tête d'illumination étant apte à illuminer au moins une partie d'une dent (D) avec des lumières de gammes spectrales différentes, ledit au moins un capteur (26) étant sensible à une lumière en provenance de ladite au moins une partie de la dent, en réponse à l'illumination, pour générer à chaque illumination de gamme spectrale différente, au moins un signal de mesure de teinte dentaire, l'outil comprenant un tronçon de fibres optiques (28) disposées à l'extrémité du capteur (26) et qui font saillie à l'extérieur de la tête d'illumination, et qui permettent de recueillir la lumière renvoyée par la dent et la diriger vers le capteur.

2. Outil selon la revendication 1, dans lequel le capteur (26) est logé dans la tête d'illumination (22) et dans lequel les sites d'émission de lumière (24) sont disposés autour du capteur.

3. Outil selon la revendication 1 ou 2, dans lequel les sites d'émission de lumière (24) sont couplés aux sources de lumière par l'intermédiaire de fibres optiques (28).

4. Outil de mesure selon la revendication 3, dans lequel tous les sites d'émission de lumière (24) sont couplés communément à un ensemble de sources de lumière (40), de manière à émettre simultanément une lumière de la même gamme spectrale, lors de l'activation d'au moins une source de lumière.

5. Outil de mesure selon l'une des revendications 1 à 4, dans lequel les sites d'émission de lumière sont des extrémités libres (50) d'un faisceau de fibres optiques, couplées aux sources de lumière.

6. Outil de mesure selon l'une des revendications 1 à 5, comprenant une poignée (20) logeant au moins l'un parmi : un jeu de sources de lumière (40), les moyens de conversion des signaux (30, 32), et une interface de transmission de données (34), et dans lequel la tête d'illumination (22) est montée de manière amovible sur la poignée.

7. Outil de mesure selon l'une des revendications 1 à 6, comprenant un premier cache (62) opaque à la lumière d'illumination, maintenu à proximité de la tête d'illumination de manière à pouvoir insérer une dent entre la tête d'illumination et le cache.

8. Outil de mesure selon l'une des revendications 1 à 7, comprenant un deuxième cache (60) solidaire de la tête d'illumination (22) et entourant les sites d'émission de lumière, pour empêcher une lumière ambiante, d'atteindre directement une partie de dent illuminée, lorsque la tête d'illumination est appliquée contre une dent.

## Patentansprüche

1. Zahnfärbungsmessgerät (10), mindestens einen Sensor (26) und einen Beleuchtungskopf (22) umfassend, der mit mehreren, mit Lichtquellen verbundenen Lichtemissionsstellen (24) versehen ist, **dadurch gekennzeichnet, dass** es mehrere Lichtemissionsstellenteileinheiten (24a, 24b) umfasst, wobei jede Lichtemissionsstellenteileinheit jeweils an eine Lichtquelle (40a, 40b) von mehreren Lichtquellen mit unterschiedlichen Lichtspektralbereichen angeschlossen ist, so dass die Lichtemissionsquellen jeder Teileinheit gleichzeitig ein Licht desselben Spektralbereichs emittieren, wobei die Lichtemissionsstellen jeder Teileinheit auf im Wesentlichen gleichmäßige Weise um den Sensor herum angeordnet sind, wobei der Beleuchtungskopf zumindest einen Teil eines Zahns (D) mit Licht unterschiedlicher Spektralbereiche beleuchten kann, wobei der mindestens eine Sensor (26) empfindlich auf ein Licht, das von dem mindestens einem Teil des Zahns stammt, als Reaktion auf die Beleuchtung reagiert, um bei jeder Beleuchtung mit einem unterschiedlichen Spektralbereich mindestens ein Zahnfärbungsmesssignal zu erzeugen, wobei das Gerät einen Teilabschnitt optischer Fasern (28) umfasst, die am Ende des Sensors (26) angeordnet sind und vom Beleuchtungskopf nach außen vorstehen, und die es ermöglichen, das vom Zahn zurückgeleitete Licht aufzufangen und zum Sensor zu leiten.

2. Gerät nach Anspruch 1, wobei der Sensor (26) im Beleuchtungskopf (22) aufgenommen ist, und wobei die Lichtemissionsstellen (24) um den Sensor herum angeordnet sind.

3. Gerät nach Anspruch 1 oder 2, wobei die Lichtemissionsstellen (24) mittels optischer Fasern (28) mit den Lichtquellen verbunden sind.

4. Gerät nach Anspruch 3, wobei die Lichtemissionsstellen (24) gemeinsam mit einer Einheit von Lichtquellen (40) verbunden sind, um bei der Aktivierung mindestens einer Lichtquelle gleichzeitig Licht desselben Spektralbereichs zu emittieren.

5. Gerät nach einem der Ansprüche 1 bis 4, wobei die Lichtemissionsstellen freie Enden (50) eines Bündels optischer Fasern sind, die mit den Lichtquellen verbunden sind.

6. Gerät nach einem der Ansprüche 1 bis 5, einen Griff (20) umfassend, der zumindest eines der folgenden Elemente aufnimmt: einen Satz Lichtquellen (40), Signalumsetzungseinrichtungen (30, 32) und eine Datenübertragungsschnittstelle (34), und wobei der Beleuchtungskopf (22) abnehmbar am Griff angebracht ist.

7. Gerät nach einem der Ansprüche 1 bis 6, eine für das Beleuchtungslicht opake erste Abdeckung (62) umfassend, die im Nahbereich des Beleuchtungskopfs gehalten ist, um einen Zahn zwischen den Beleuchtungskopf und die Abdeckung einschieben zu können.

8. Gerät nach einem der Ansprüche 1 bis 7, eine zweite Abdeckung (60) umfassend, die fest mit dem Beleuchtungskopf (22) verbunden ist und die Lichtemissionsstellen umgibt, um Umgebungslicht daran zu hindern, ein beleuchtetes Zahnteil direkt zu erreichen, wenn der Beleuchtungskopf an einen Zahn angelegt ist.

## Claims

1. A dental shade measuring tool (20) comprising at least one sensor (26) and an illumination head (22) provided with a plurality of light emission sites (24) associated with light sources, **characterised in that** it comprises a plurality of sub-assemblies of light emission sites (24a, 24b), each sub-assembly of light emission sites being respectively coupled to a light source (40a, 40b) from among a plurality of light sources of different spectral ranges, such that the light emission sites of each sub-assembly simultaneously emit a light of the same spectral range, the light emission sites of each sub-assembly being distributed substantially regularly around the sensor, the illumination head being capable of illuminating at least one part of a tooth (D) with lights of different spectral ranges, said at least one sensor (26) being sensitive to a light coming from said at least one part of the tooth in response to the illumination to generate at each illumination of a different spectral range at least one dental shade measuring signal, the tool comprising a portion of optical fibres (28) which are disposed at the end of the sensor (26) and which project to the exterior of the illumination head and which make it possible to collect the light returned by the tooth and direct it towards the sensor.

2. A tool according to claim 1 wherein the sensor (26) is accommodated in the illumination head (22) and wherein the light emission sites (24) are disposed around the sensor.

3. A tool according to claim 1 or claim 2 wherein the light emission sites (24) are coupled to the light sources by way of optical fibres (28).

4. A measuring tool according to claim 3 wherein the light emission sites (24) are coupled in common to an assembly of light sources (40) so as to simultaneously emit a light of the same spectral range upon activation of at least one light source.

5. A measuring tool according to one of claims 1 to 4 wherein the light emission sites are free ends (50) of a bunch of optical fibres which are coupled to the light sources.

6. A measuring tool according to one of claims 1 to 5 comprising a handle (20) accommodating at least one of: a set of light sources (40), the signal conversion means (30, 32) and a data transmission interface (34) and wherein the illumination head (22) is mounted removably on the handle.

7. A measuring tool according to one of claims 1 to 6 comprising a first cover (62) which is opaque in relation to the illumination light and which is held in the proximity of the illumination head so as to be able to insert a tooth between the illumination head and the cover.

8. A measuring tool according to one of claims 1 to 7 comprising a second cover (60) fixed with respect to the illumination head (22) and surrounding the light emission sites to prevent ambient light from directly reaching an illuminated tooth part when the illumination head is applied against a tooth.
